# EUROPEAN PATENT APPLICATION

(11) **EP 4 843 822 A1**
(43) Date of publication of application: **25.11.2026**
(21) Application number: 25863880.8
(22) Date of filing: 29.07.2025
(51) Int. Cl.: B60L 53/68, B60L 53/66, B60L 58/10, H04W 4/40

(54) **METHOD FOR PROVIDING DIAGNOSTIC INFORMATION ON BATTERY OF ELECTRIC VEHICLE, AND ELECTRONIC DEVICE FOR PERFORMING SAME**

(30) Priority: 04.09.2024 KR 20240119784
(71) Applicant: LG Energy Solution, Ltd., Seoul 07335 (KR)
(72) Inventor: KIM, Minyi, Daejeon 34122 (KR)
(74) Representative: Plasseraud IP
(86) International application number: PCT/KR2025/011236
(87) International publication number: WO 2026/054330

(57) **Abstract**

Disclosed are an electronic device and a method for providing diagnostic information on a battery of an electric vehicle. The electronic device comprises: a communication interface communicatively connected to a user terminal and an external server; a memory; and a processor, wherein the processor is configured to: receive, from the user terminal, information regarding a communication connection status of the electric vehicle; determine whether the communication between the user terminal and the electric vehicle is connected on the basis of the information regarding the communication connection status; when it is determined that the communication between the user terminal and the electric vehicle is disconnected, transmit, via the external server, a request to confirm whether the electric vehicle is being charged; when a response indicating that the electric vehicle is being charged is received from the external server, receive charging information of the electric vehicle from the external server; and provide the charging information of the electric vehicle to the user terminal.

## Description

### Technical Field

The present disclosure relates to a method for providing diagnostic information on a battery of an electric vehicle and an electronic device for performing the same.

### Background Art

The importance of the technique of providing diagnostic information on a battery of an electric vehicle in order to efficiently manage and operate the electric vehicle is currently increased. As monitoring and analyzing data such as the state of charge, capacity, or state of health of the battery embedded in the electric vehicle, the user may detect a decrease in performance of the battery at an early stage and take appropriate measures. This may contribute to extending the battery life and reducing overall operations costs of the electric vehicle. Also, an attempt to provide the diagnostic information on the battery of the electric vehicle to the electric vehicle user in various situations through communication between the electric vehicle, a user terminal, and a server is currently made.

### Detailed Description of the Invention

### Technical Problems

Example embodiments of the present disclosure are to provide, through a method of providing diagnostic information on a battery of an electric vehicle and an electronic device for performing the same, the diagnostic information on the battery of the electric vehicle to a user terminal regardless of whether communication between the user terminal and the electric vehicle is connected.

However, the goals to be achieved by example embodiments of the present disclosure are not limited to the objectives described above and other objects may be clearly understood from the following example embodiments.

### Technical solutions

According to an aspect, there is provided an electronic device including a communication interface communicatively connected to a user terminal and an external server, a memory, and a processor, and the processor is configured to receive information on a communication connection status of an electric vehicle from the user terminal, identify, based on the information on the communication connection status, whether communication between the user terminal and the electric vehicle is connected, transmit, when identifying that communication connection between the user terminal and the electric vehicle is terminated, a request for identifying whether the electric vehicle is currently charged through the external server, receive charging information on the electric vehicle from the external server when a response indicating that the electrical vehicle is currently charged is received from the external server, and provide the charging information on the electric vehicle to the user terminal.

The processor may be configured to identify whether the electric vehicle is currently charged through the external server based on identification information on the electric vehicle.

The charging information on the electric vehicle may be acquired based on power line communication between battery management systems included in the electric vehicle and a charging device configured to charge the electric vehicle.

The processor may be configured to provide battery information on the electric vehicle, which is acquired based on the charging information on the electric vehicle, and diagnostic information on a battery of the electric vehicle to the user terminal.

The processor may be configured to update diagnostic information on a battery of the electric vehicle based on the charging information on the electric vehicle identified by the external server according to a predetermined period.

The processor may be configured to transmit, to the user terminal, a request for first battery information on the electric vehicle from termination of the communication connection with the electric vehicle to resumption of the communication connection when a response indicating that the electric vehicle is not currently charged is received from the external server.

The processor may be configured to provide, to the user terminal, diagnostic information on a battery of the electric vehicle acquired based on the first battery information after the first battery information is received from the user terminal.

When the communication between the user terminal and the electric vehicle is identified as being connected, the processor may be configured to receive battery information on the electric vehicle, which is acquired from a self-diagnosis device of the electric vehicle, from the user terminal, and transmit diagnostic information on a battery of the electric vehicle, which is based on the battery information on the electric vehicle, to the user terminal.

The communication connection between the user terminal and the electric vehicle may be performed based on at least one communication scheme of Bluetooth communication and Wi-Fi communication.

According to another aspect, there is also provided a method of providing diagnostic information on a battery of an electric vehicle, the method performed by an electronic device and including receiving information on a communication connection status of an electric vehicle from the user terminal, identifying, based on the information on the communication connection status, whether communication between the user terminal and the electric vehicle is connected, transmitting, when identifying that communication connection between the user terminal and the electric vehicle is terminated, a request for identifying whether the electric vehicle is currently charged through an external server, receiving charging information on the electric vehicle from the external server when a response indicating that the electrical vehicle is currently charged is received from the external server, and providing the charging information on the electric vehicle to the user terminal.

According to still another aspect, there is also provided a diagnostic information provision system including a user terminal configured to transmit information on communication connection status of an electric vehicle to an electronic device, and an electronic device configured to identify, based on the information on the communication connection status, whether communication between the user terminal and the electric vehicle is connected, transmit, when identifying that communication connection between the user terminal and the electric vehicle is terminated, a request for identifying whether the electric vehicle is currently charged through the external server, receive charging information on the electric vehicle from the external server when a response indicating that the electrical vehicle is currently charged is received from the external server, and provide the charging information on the electric vehicle to the user terminal.

Additional aspects of example embodiments will be set forth in part in the description which follows and, in part, will be apparent from the description, or may be learned by practice of the disclosure.

### Effects of the Invention

According to example embodiments, one or more of the following effects may be expected.

According to example embodiments of the present disclosure, it is possible to provide diagnostic information on a battery of an electric vehicle according to battery information on the electric vehicle received by a user terminal from the electric vehicle when communication between the electric vehicle and the user terminal is connected.

Also, according to example embodiments of the present disclosure, when communication connection between the electric vehicle and the user terminal is terminated, it is possible to receive charging information on the electric vehicle from an external server associated with a charging terminal that charges the electric vehicle and accordingly provide the diagnostic information on the battery of the electric vehicle.

Effects of the present disclosure are not limited to those described above and other effects may be made apparent to those skilled in the art from the following description of the accompanying claims.

### Brief Description of Drawings

FIG. 1 illustrates a system providing diagnostic information on a battery of an electric vehicle according to an example embodiment.
FIG. 2 is a block diagram illustrating a configuration of an electronic device according to an example embodiment.
FIG. 3 is a flowchart for describing a method of providing diagnostic information on a battery of an electric vehicle according to an example embodiment.
FIG. 4 is a diagram for describing an operation of an electronic device at a time at which a user terminal and an electric vehicle are communicatively connected in a method of providing diagnostic information on a battery of an electric vehicle according to an example embodiment.
FIGS. 5a and 5b are diagrams for describing an operation of an electronic device at a time at which communication connection between a user terminal and an electric vehicle is terminated in a method of providing diagnostic information on a battery of an electric vehicle according to an example embodiment.

### Mode for Carrying Out the Invention

Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

In the entire specification, when an element is referred to as "including" another element, the element should not be understood as excluding other elements so long as there is no special conflicting description, and the element may include at least one other element.

Throughout the specification, expression "at least one of a, b, and c" may include 'a only', 'b only', 'c only', 'a and b', 'a and c', 'b and c', or 'all of a, b, and c'.

In the present disclosure, a "terminal" may be implemented as a computer or a portable terminal capable of accessing a server or another apparatus through a network. The computer may include, for example, a laptop computer, a desktop computer, and a notebook equipped with a web browser. The portable apparatus may be a wireless communication device ensuring a portability and a mobility, and include any type of handheld wireless communication device, for example, a tablet PC, a smartphone, a communication-based apparatus such as international mobile telecommunication (IMT), code division multiple access (CDMA), W-code division multiple access (W-CDMA), and long term evolution (LTE).

In the following description, example embodiments of the present disclosure will be described in detail with reference to the accompanying drawings so that those skilled in the art can easily carry out the present disclosure. However, the present disclosure may be embodied in many different forms and is not limited to the example embodiments described herein.

Hereinafter, the example embodiments of the present disclosure will be described with reference to the accompanying drawings.

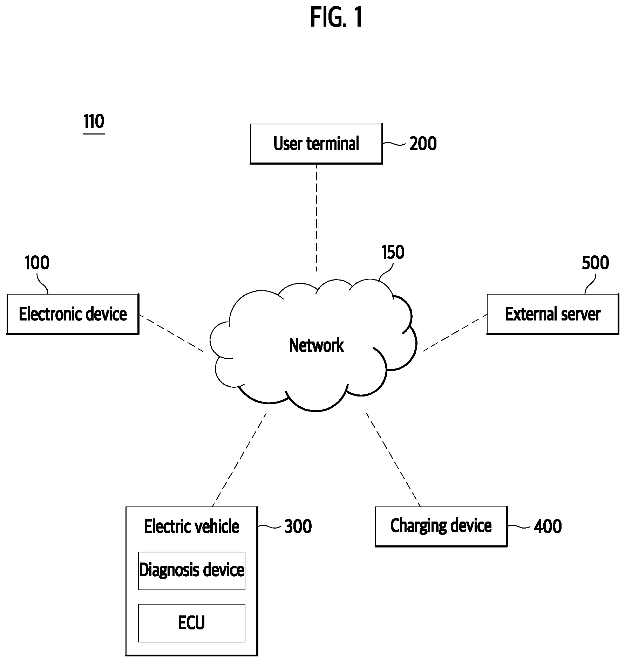

FIG. 1 illustrates a system providing diagnostic information on a battery of an electric vehicle according to an example embodiment.

Referring to FIG. 1, a system 110 that provides diagnostic information on a battery of an electric vehicle 300 according to an example embodiment may include a user terminal 200 that transmits information on a communication connection status of the electric vehicle 300 to an electronic device 100 and the electronic device 100.

The electronic device 100 according to an example embodiment may correspond to a device that configures and provides a variety of information. The electronic device 100 may be a server device that manages information on the battery of the electric vehicle 300 and information on a vehicle. The electronic device 100 may receive the information on the communication connection status of the electric vehicle 300 from the user terminal 200. The electronic device 100 may transmit, when identifying that communication connection between the user terminal 200 and the electric vehicle 300 is terminated based on the information on the communication connection status, a request for identifying whether the electric vehicle 300 is currently charged through an external server 500 and provide, to user terminal 200, charging information on the electric vehicle 300 received through the external server 500 when the electrical vehicle 300 is currently charged. The electronic device 100 may identify that the communication connection between the user terminal 200 and the electric vehicle 300 is terminated, transmit the request for identifying whether the electric vehicle 300 is currently charged through the external server 500, and transmit, to the user terminal 200, a request for first battery information on the electric vehicle 300 from termination of the communication connection with the electric vehicle 300 to resumption of the communication connection when the electric vehicle 300 is not currently charged. When identifying that the user terminal 200 and the electric vehicle 300 are currently communicatively connected, the electronic device 100 may receive battery information on the electric vehicle 300, which is acquired through on-board diagnostics (OBD) of the electric vehicle 300, from the user terminal 200 and transmit the diagnostic information on the battery of the electric vehicle 300, which is based on the battery information on the electric vehicle 300, to the user terminal 200.

In an example embodiment, the electronic device 100 may correspond to a server or an analysis device that provides a function of providing, to the user terminal 200, the charging information on the electric vehicle 300 based on whether communication between the user terminal 200 and the electric vehicle 300 is connected and whether the electric vehicle 300 is charged or providing the charging information on the electric vehicle 300 to the user terminal 200 by communicating with a charging device 400 or the external server 500. In other words, the electronic device 100 may be communicatively connected to the electric vehicle 300 to acquire the battery information on the electric vehicle 300 from a diagnosis device of the electric vehicle 300 and may be interlocked with the user terminal 200, which generates the diagnostic information on the battery of the electric vehicle 300 based on the battery information on the electric vehicle 300, to operate. Also, the electronic device 100 may be interlocked with the charging device 400, which charges the battery of the electric vehicle 300, to operate and may be also interlocked with the external server 500, which manages the charging device 400, to operate. Meanwhile, particular elements, which are associated with the present example embodiment, are illustrated in FIG. 1. Thus, those skilled in the art associated with the present example embodiment may understand that other elements in general use in addition to the elements illustrated in FIG. 1 may be further included.

The user terminal 200 according to an example embodiment may correspond to a terminal used by a user using the electric vehicle 300 and perform the communication connection with the electric vehicle 300 based on at least one communication scheme of Bluetooth communication and/or Wi-Fi communication. For example, the user terminal 200 may acquire the battery information on the electric vehicle 300 from the diagnosis device of the electric vehicle 300 when communicatively connected to the electric vehicle 300. The user terminal 200 may acquire the battery information on the electric vehicle 300, transmit the battery information on the electric vehicle 300 to the electronic device 100, and receive the diagnostic information on the battery of the electric vehicle 300, which is acquired by the electronic device 100 based on the battery information on the electric vehicle 300. In addition, the user terminal 200 may acquire the battery information on the electric vehicle 300, generate the diagnostic information on the battery of the electric vehicle 300, and transfer the diagnostic information on the battery of the electric vehicle 300 to the electronic device 100. When the communication between the user terminal 200 and the electric vehicle 300 is terminated, the user terminal 200 may transmit a request for identifying whether the electric vehicle 300 is charged from the electronic device 100. After transmitting the request for identifying whether the electric vehicle 300 is charged from the electronic device 100, the user terminal 200 may receive a response indicating that the electric vehicle 300 is currently charged according to a result of identification by the electronic device 100 through the charging device 400 or the external server 500. When the electric vehicle 300 is currently charged, the user terminal 200 may receive, from the electronic device 100, the charging information on the electric vehicle 300, which is acquired through power line communication (PLC) connection between the charging device 400 identified by the electronic device 100 and a battery management system (BMS) included in the electric vehicle 300. The charging information on the electric vehicle 300 may include at least one piece of time-series information among an electric current, a voltage, an initial state of charge (SoC), an internal resistance, and an internal temperature of the battery, which are based on progressing of charging of the battery which is embedded in the electric vehicle 300.

The electric vehicle 300 according to an example embodiment may include the OBD and an electronic control unit (ECU). The OBD may receive a variety of information on the electric vehicle from the BMS through the ECU and transmit the variety of information to the user terminal 200. In an example embodiment, the electric vehicle 300 may be connected to the user terminal 200 in a manner of the Bluetooth communication within a distance within which the Bluetooth communication with the user terminal 200 which is used by the user using the electric vehicle 300 is allowed. When the user terminal 200 is spaced apart by a distance in which Bluetooth communication connection is not allowed from the electric vehicle 300, the communication connection between the electric vehicle 300 and the user terminal 200 may be terminated. The electric vehicle 300 may be connected through the power line communication between the charging device 400 and the battery management system included in the electric vehicle 300 and receive charging power through the charging device 400 to be charged and may be spaced apart from the user terminal 200 due to movement of the user to an outside of the electric vehicle 300 in a charging time, so that the communication connection may be terminated. Also, the communication connection between the electric vehicle 300 and the user terminal 200 may be terminated when a Bluetooth communication function of the user terminal 200 is inactivated by a user input. When the communication connection with the user terminal is resumed, the electric vehicle 300 may transmit information on the battery of the electric vehicle 300 from the termination of the communication connection to the resumption of the communication connection through the on-board diagnostics to the user terminal 200 through the Bluetooth communication. Hereinafter, it is illustrated that the electric vehicle 300 communicates with the user terminal 200 and the charging device 400, but example embodiments of the present disclosure are not limited to a predetermined example embodiment.

For example, an example embodiment in which the electric vehicle 300 communicates with the user terminal 200, which will be described below, may include an example embodiment in which the electric vehicle 300 performs the Bluetooth communication with the user terminal 200 through the diagnosis device and also an example embodiment in which the electric vehicle 300 transmits the battery information on the electric vehicle 300 to the user terminal 200 without the diagnosis device.

For example, an example embodiment in which the electric vehicle 300 communicates with the charging device 400 when the electric vehicle 300 is charged by the charging device 400 may include an example embodiment in which the electric vehicle 300 transmits the battery information to the charging device 400 by using the PLC from the diagnosis device or the ECU of the electric vehicle 300 and also an example embodiment in which the electric vehicle 300 transmits the battery information on the electric vehicle 300 by performing wireless communication with the charging device 400.

The charging device 400 which is interlocked with the system 110 providing the diagnostic information on the battery of the electric vehicle 300 according to an example embodiment may supply the charging power to the electric vehicle 300 by performing the power line communication with the battery management system included in the electric vehicle 300, acquire the charging information on the electric vehicle 300, and transmit the charging information to the external server 500, which manages the charging device 400, or the electronic device 100. The charging information on the electric vehicle 300, which is acquired while the charging device 400 charges the electric vehicle 300, may be transmitted to the user terminal 200 through the electronic device 100 when the communication connection between the user terminal 200 and the electric vehicle 300 is terminated. With respect to the charging information on the electric vehicle 300, the external server 500 may acquire a variety of information on the electric vehicle 300 charged through the charging device 400 and on the user terminal 200 of the user using the electric vehicle 300.

Here, the electronic device 100 and the external server 500 each may be a completely separated and independent object. However, the electronic device 100 and the external server 500 may be only conceptually separated to exist in one device or system. That is, in some example embodiments, the electronic device 100 may be coupled to the external server 500 to exist. That is, one computing device having a function of providing battery charging information on the electric vehicle 300 to the user terminal 200 may perform all functions of the electronic device 100 and a battery management device 200 that will be described below, and accordingly, such an example embodiment is regarded as being included in the scope of the present disclosure.

A network 150 may include a local area network (LAN), a wide area network (WAN), a value added network (VAN), a mobile radio communication network, a satellite communication network, and a combination thereof, may be a comprehensive data network for allowing each entity illustrated in FIG. 1 to smoothly communicate with another, and may include the wired Internet, the wireless Internet, and a mobile wireless communication network. Communication may include, for example, PLC, Wi-Fi, Bluetooth, Bluetooth low energy, Zigbee, Wi-Fi Direct (WFD), ultra wideband (UWB), Infrared Data Association (IrDA), near field communication (NFC), or the like, but is not limited thereto.

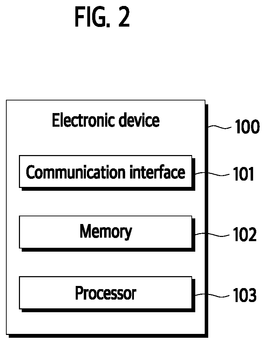

FIG. 2 is a block diagram illustrating a configuration of an electronic device according to an example embodiment.

Referring to FIG. 2, the electronic device 100 according to an example embodiment may include a communication interface 101, a memory 102 and a processor 103. Particular elements, which are associated with the present example embodiment, are illustrated with respect to the electronic device 100 which is illustrated in FIG. 2. Thus, those skilled in the art associated with the present example embodiment may understand that other elements in general use in addition to the elements illustrated in FIG. 2 may be further included.

The communication interface 101 according to an example embodiment may be communicatively connected to the user terminal 200 and the external server 500 by performing wired/wireless communication through a network 150. The electronic device 100 may communicate with an external electronic device by using the communication interface 101. The external electronic device may be a terminal, a device, or a server. In addition, a communication scheme used by the communication interface 101 may correspond to schemes similar to a communication scheme used for communication with the network 150 described above.

The memory 102 according to an example embodiment may be hardware that stores a variety of data processed in the electronic device 100. The memory 102 may be positioned in the processor 103 in the electronic device 100 and may store data processed and to be processed through the processor 103. Also, the memory 102 may store a basic programming and data structure for providing a function of at least one example embodiment of the present disclosure and also store applications (e.g., a program, a code module, or an instruction), drivers, and the like that may provide the function of the at least one example embodiment of the present disclosure. The memory 102 may include a random access memory (RAM) such as a dynamic random access memory (DRAM) and a static random access memory (SRAM), a read-only memory (ROM), an electrically erasable programmable read-only memory (EEPROM), a compact disc (CD)-ROM, Blu-ray or another optical disc storage, a hard disk drive (HDD), a solid state drive (SSD), or a flash memory, but is not limited to a predetermined case described by example embodiments of the present disclosure.

In an example embodiment, the processor 103 may control overall operations of the electronic device 100 and may process data and a signal. The processor 103 may be formed with at least one hardware unit. In addition, the processor 103 may be operated by one or more software modules generated by executing program code stored in the memory 102. Since the processor 103 may include the memory 102, the processor 103 may control the overall operations of the electronic device 100 and process the data and the signal by executing program code stored in the memory 102. In other words, the processor 103 according to an example embodiment may perform overall processes of providing diagnostic information on a battery of the electric vehicle 300 depending on whether communication between the user terminal 200 and the electric vehicle 300 is connected and whether the electric vehicle 300 is charged. A description thereof will be provided below in detail.

The electronic device 100 according to the above-described example embodiments may include a processor, a memory that stores and executes program data, a permanent storage such as a disk drive, a communication port for communicating with an external device, and a user interface device such as a touch panel, a key, and a button. Methods implemented by software modules or algorithms may be stored in a computer-readable recording medium as computer-readable code or program instructions executable in the processor. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network so that computer-readable codes may be stored and executed in a dispersed manner. The medium may be read by a computer, stored in the memory, and executed by the processor.

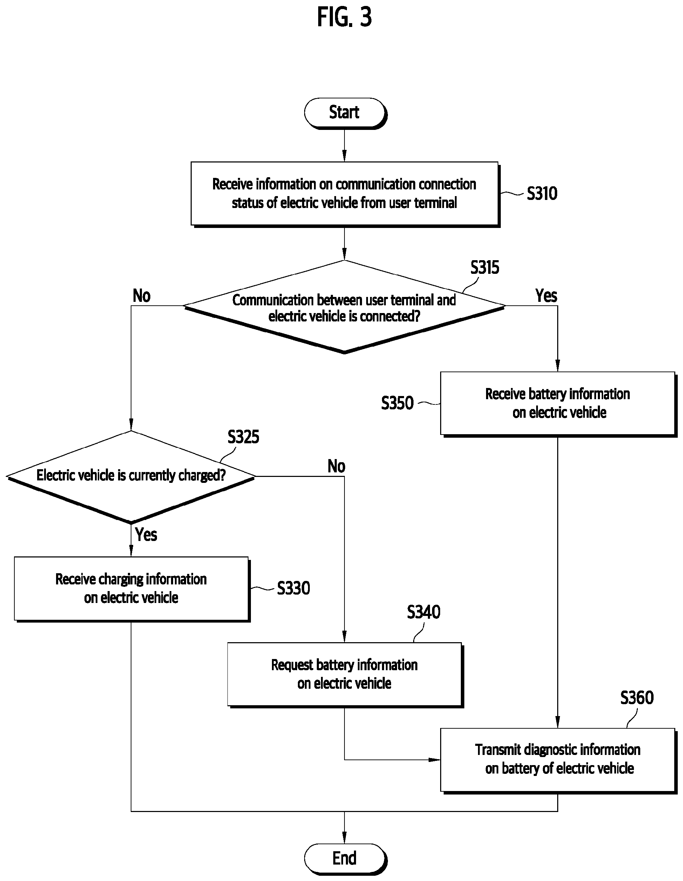

FIG. 3 is a flowchart for describing a method of providing diagnostic information on a battery of an electric vehicle according to an example embodiment.

Referring to FIG. 3, in operation S310, the electronic device 100 according to an example embodiment may receive information on a communication connection status of the electric vehicle 300 from the user terminal 200. The electronic device 100 may receive a request for transmitting the information on the communication connection status of the user terminal 200 and the electric vehicle 300 to the user terminal 200 by periods corresponding to predetermined time intervals and may receive the information on the communication connection status of the electronic device 300 from the user terminal 200 in response to the request for the transmitting. The information on the communication connection status of the electric vehicle 300 may include information on at least one of a communication connection type, communication signal strength, a communication information transmission rate, and a communication delay time, which are associated with a communication scheme performed between the user terminal 200 and the electric vehicle 300.

In operation S315, the electronic device 100 according to an example embodiment may identify whether the user terminal 200 and the electric vehicle 300 are communicatively connected. The electronic device 100 may identify, based on the information on the communication connection status, whether communication between the user terminal 200 and the electric vehicle 300 is connected. In an example embodiment, the electronic device 100 may determine that the user terminal 200 and the electric vehicle 300 are in a communication connection-terminated status when the type of communication connection performed between the user terminal 200 and the electric vehicle 300 is not identified through the information on the communication connection status of the electric vehicle 300, when the communication signal strength or the communication information transmission rate is less than a threshold value, or when the communication delay time exceeds a threshold value. In an example embodiment, the electronic device 100 may determine that the user terminal 200 and the electric vehicle 300 are in a communicatively connected status when the type of the communication connection performed between the user terminal 200 and the electric vehicle 300 is identified through the information on the communication connection status of the electric vehicle 300, when the communication signal strength or the communication information transmission rate is greater than or equal to the threshold value, and when the communication delay time is less than the threshold value.

In operation S325, the electronic device 100 according to an example embodiment may identify, when identifying that the communication connection between the user terminal 200 and the electric vehicle 300 is terminated in operation S315, whether the electric vehicle 300 is currently charged. For example, when the communication connection between the user terminal 200 and the electric vehicle 300 is terminated, the electronic device 100 may transmit a request for identifying whether the electric vehicle 300 is charged from the user terminal 200 in operation S325. In operation S325, the electronic device 100 may transmit the request for identifying whether the electric vehicle 300 is currently charged through the external server 500. The request for identifying whether the electric vehicle 300 is currently charged may be performed based on identification information on the electric vehicle 300. In other words, based on the identification information on the electric vehicle 300, the electronic device 100 may identify, through the external server 500, whether the electric vehicle 300 is currently charged. The identification information on the electric vehicle 300 may refer to information for distinguishing and identifying a predetermined electric vehicle 300 among electric vehicles 300 connected to the charging device 400 to be currently charged.

For example, the identification information on the electric vehicle 300 may include a charging card number for the electric vehicle 300, which is registered in the user terminal 200 or the electronic device 100. The electronic device 100 may receive the identification information on the electric vehicle 300, which includes the charging card number for the electric vehicle 300 registered in the user terminal 200, from the user terminal 200 and transmit, to the external server 500, the request for identifying whether the electric vehicle 300 is currently charged, which requires identification of whether the electric vehicle 300 which is currently charged with a charging card having the charging card number is present through communication with the charging device 400 or the external server 500. When the electric vehicle 300 which is currently charged at the charging device 400 with a charging card having a number equal to the charging card number received from the user terminal 200 is present, the electronic device 100 may receive a response indicating that the electric vehicle 300 is currently charged from the external server 500 and determine that the electric vehicle 300 is currently charged. For example, the identification information on the electric vehicle 300 may include a quick-response (QR) code existing on a predetermined charging device 400. The electronic device 100 may recognize scanning of the QR code existing on the predetermined charging device 400 from the user terminal 200 and determine that the electric vehicle 300 which is registered in the user terminal 200 is currently charged at the predetermined charging device 400. However, the identification information on the electric vehicle 300 of example embodiments of the present disclosure is not limited to the above-described case.

In operation S330, the electronic device 100 may provide charging information on the electric vehicle 300 to the user terminal 200 when determining that the electric vehicle 300 is currently charged in operation S325. In operation S330, the electronic device 100 may provide the charging information on the electric vehicle 300, which is acquired through power line communication between the charging device 400 and a battery management system included in the electric vehicle 300, to the user terminal 200. That is, when the communication connection between the user terminal 200 and the electric vehicle 300 is terminated, and when the electric vehicle 300 is currently charged, the electronic device 100 may receive the charging information on the electric vehicle 300, which is acquired through the power line communication between the electric vehicle 300 and the charging device 400, from the external server 500, provide the charging information on the electric vehicle 300 to the user terminal 200, and provide, to the user terminal 200, diagnostic information on a battery of the electric vehicle 300 even in a status in which the communication connection between the user terminal 200 and the electric vehicle 300 is currently terminated. The diagnostic information on the battery of the electric vehicle 300 may include information on a driving distance, a driving time, energy efficiency, and an estimated drivable distance of the electric vehicle 300. In addition, the diagnostic information on the battery of the electric vehicle 300 may include information on a pattern of charging the battery of the electric vehicle 300, a score of a life of the battery acquired based on a practice of driving of the electric vehicle 300 by a user, a score of stress management for the battery, and regenerative braking efficiency based on battery charging statistics data.

In operation S340, the electronic device 100 may transmit, to the user terminal 200, a request for the diagnostic information on the battery of the electric vehicle 300 after resumption of the communication connection with the electric vehicle 300 when determining that the electric vehicle 300 is not currently charged in operation S325. That is, for example, in a case in which the communication connection between the user terminal 200 and the electric vehicle 300 is terminated while the electric vehicle 300 is not currently charged, such a case in which a Bluetooth communication function of the user terminal 200 is terminated by a user input, the electronic device 100 may require, from the user terminal 200, the diagnostic information on the electric vehicle 300 after the resumption of the communication connection with the electric vehicle 300. For example, when the communication connection between the user terminal 200 and the electric vehicle 300 is terminated at a first time point, and when the communication connection between the user terminal 200 and the electric vehicle 300 is resumed at a second time point after the first time point, the user terminal 200 may correspond to a status of not receiving, from the electric vehicle 300, first battery information on the electric vehicle 300 which corresponds to a period of time after the first time point and before the second time point. In this regard, the electronic device 100 may transmit, to the user terminal 200, a request for the first battery information on the electronic device 300 from the first time point, which is a time point at which the communication connection with the electric vehicle 300 is terminated, to the second time point, which is a time point at which the communication connection is resumed, from the user terminal 200. In operation S360, the electronic device 100 may acquire the diagnostic information on the battery of the electric vehicle 300 based on the first battery information and provide the diagnostic information to the user terminal 200.

In operation S350, the electronic device 100 may receive the diagnostic information on the battery of the electric vehicle 300 from the user terminal 200 when identifying that the communication between the user terminal 200 and the electric vehicle 300 is connected in operation S315. In operation S350, the electronic device 100 may receive the diagnostic information on the battery of the electric vehicle 300, which is based on battery information on the electric vehicle 300 acquired from a diagnosis device of the electric vehicle 300, from the user terminal 200. In operation S360, the diagnostic information on the battery of the electric vehicle 300 may be transmitted. The diagnostic information on the battery of the electric vehicle 300 may include the information on the driving distance, the driving time, the energy efficiency, and the estimated drivable distance of the electric vehicle 300, which are based on a voltage, an SoC, an internal resistance, and an internal temperature of the battery of the electric vehicle 300. In addition, the diagnostic information on the battery of the electric vehicle 300 may include information on the score of the life of the battery of the electric vehicle 300, the score of the stress management for the battery, and the regenerative braking efficiency based on the battery charging statistics data. However, the diagnostic information on the battery of the electric vehicle 300, which is provided by the electric vehicle 100 according to the present disclosure, is not limited to the above-described pieces of predetermined information.

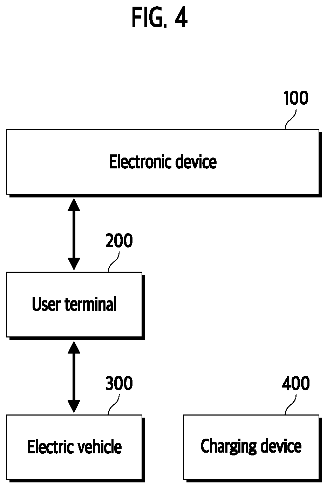

FIG. 4 is a diagram for describing an operation of an electronic device at a time at which a user terminal and the electric vehicle 300 are communicatively connected in a method of providing diagnostic information on a battery of the electric vehicle 300 according to an example embodiment.

Referring to FIG. 4, for example, a user using the electric vehicle 300 may identify a communication connection status of the user terminal 200 and the electric vehicle 300 in a situation of driving the electric vehicle 300. The user terminal 200 according to an example embodiment may receive battery information on the electric vehicle 300, which is acquired from a diagnosis device of the electric vehicle 300 which is communicatively connected. For example, the battery information on the electric vehicle 300 may include at least one piece of time-series information among an electric current, a voltage, an initial SoC, an internal resistance, and an internal temperature of the battery which is embedded in the electric vehicle 300. The user terminal 200 according to an example embodiment may receive the battery information on the electric vehicle 300 from a self-diagnosis device of the electric vehicle 300 based on at least one communication scheme of Bluetooth communication and Wi-Fi communication. The user terminal 200 according to an example embodiment may receive the battery information on the electric vehicle 300 to the electronic device 100. The electronic device 100 may transmit the diagnostic information on the battery of the electric vehicle 300 based on the battery information on the electric vehicle 300 to the user terminal 200. The user terminal 200 according to another example embodiment may receive the battery information on the electric vehicle 300 to the electronic device 100 and transmit the diagnostic information on the battery 300 which is based thereon to the electronic device 100. In other words, the user terminal 200 may generate the diagnostic information on the battery of the electric vehicle 300 through self-analysis by receiving the battery information on the electric vehicle 300 from the self-diagnosis device of the electric vehicle 300 and transmit the diagnostic information to the electronic device 100 so that the diagnostic information on the battery of the electric vehicle 300 is managed by the electronic device 100.

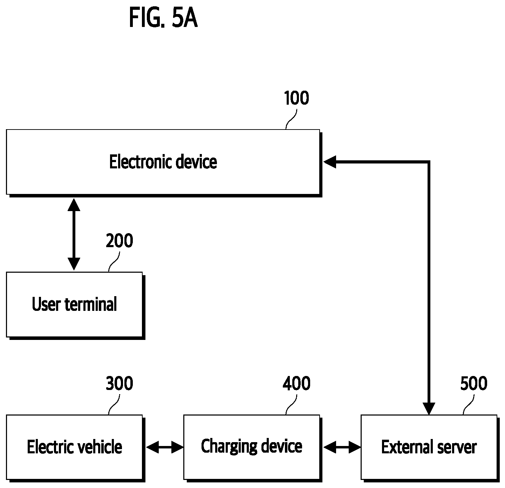

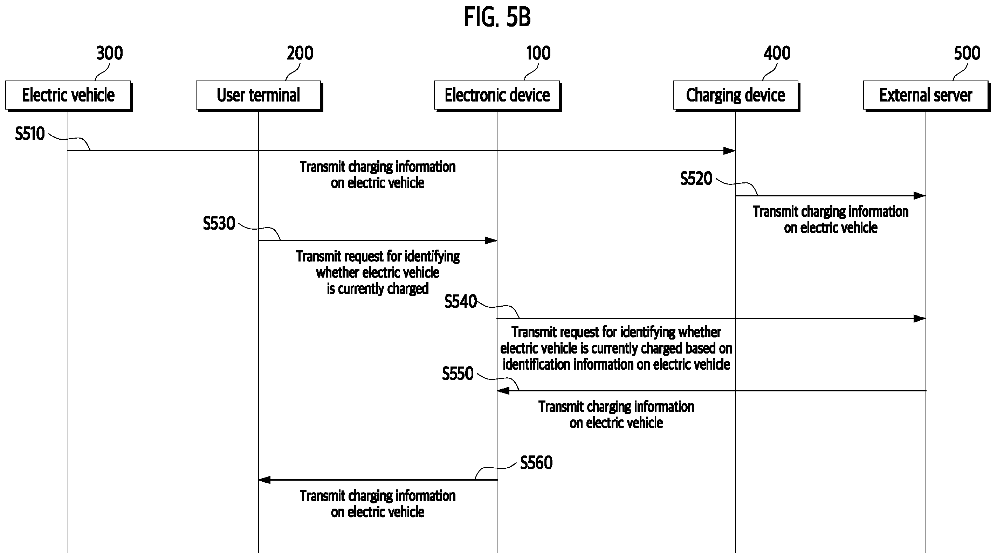

FIGS. 5a and 5b are diagrams for describing an operation of an electric device at a time at which communication connection between a user terminal and the electric vehicle 300 is terminated in a method of providing diagnostic information on a battery of an electric vehicle 300 according to an example embodiment.

Referring to FIG. 5a, for example, a communication connection status of the user terminal 200, the electronic device 100, the charging device 400, and the external server 500 may be identified when the electric vehicle 300 and the user terminal 200 are spaced apart during charging of the electric vehicle 300 by a user using the electric vehicle 300 or in a situation in which communication connection between the user terminal 200 and the electric vehicle 300 is currently terminated by a user input.

The user terminal 200 according to an example embodiment may transmit, to the electronic device 100, a request for identifying whether the electric vehicle 300 is currently charged at a time at which the communication connection with the electric vehicle 300 is terminated. The electronic device 100 may transmit the request for identifying whether the electric vehicle 300 is currently charged through the external server 500. The external server 500 may identify, based on identification information on the electric vehicle 300, through communication with the charging device 400, whether the electric vehicle 300 is currently charged at a predetermined charging device 400. When the electric vehicle 300 is currently charged at the predetermined charging device 400, the external server 500 may transmit a response indicating that the electric vehicle 300 is currently charged to the electronic device 100. The electronic device 100 which receives the response indicating that the electric vehicle 300 is currently charged from the external server 500 may transmit the response indicating that the electric vehicle 300 is currently charged to the user terminal 200. In addition, the electronic device 100 may receive charging information on the electric vehicle 300, which is acquired based on power line communication between the charging device 400 which charges the electric vehicle 300 and a battery management system included in the electric vehicle 300, from the external server 500 and transmit the charging information to the user terminal 200. The electronic device 100 may provide battery information on the electric vehicle 300, which is acquired based on the charging information on the electric vehicle 300, and the diagnostic information on the battery of the electric vehicle 300 to the user terminal 200. In an example embodiment, the battery information on the electric vehicle 300 acquired based on the charging information on the electric vehicle 300 may include time-series information on at least one of a current electric current, a voltage, an SoC, an internal resistance, and an internal temperature of the battery embedded in the electric vehicle 300, which are acquired based on the charging information. In an example embodiment, the diagnostic information on the battery of the electric vehicle 300 may be acquired based on the battery information on the electric vehicle 300, which is acquired based on the charging information on the electric vehicle 300.

Referring to FIG. 5b, for example, while charging the electric vehicle 300, the user using the electric vehicle 300 may identify a process of performing communication between the electric vehicle 300, the user terminal 200, the electronic device 100, the charging device 400, and the external server 500.

In operation S510, the electric vehicle 300 may transmit the charging information on the electric vehicle 300 through the power line communication between the battery management system included in the electric vehicle 300 and the charging device 400 which currently charges the electric vehicle 300. The charging device 400 may receive, through the power line communication, the charging information on the electric vehicle 300 from a time point of beginning charging of the electric vehicle 300 to a time point of ending the charging of the electric vehicle.

In operation S520, the charging device 400 may transmit the charging information on the electric vehicle 300 to the external server 500. The charging device 400 may transmit charging information on the electric vehicle from the time point of beginning the charging of the electric vehicle 300 to a predetermined time point to the external server.

In operation S530, the user terminal 200 may transmit the request for identifying whether the electric vehicle 300 is currently charged to the electronic device 100. The user terminal may receive the request for identifying whether the electric vehicle 300 is currently charged after a time point of terminating the communication connection with the electric vehicle 300. FIG. 5b illustrates that S530 is performed after previous operations S510 to S520, but example embodiments according to the present disclosure are not limited to the above case.

In operation S540, the electronic device 100 may transmit the request for identifying whether the electric vehicle 300 is currently charged to the external server 500 based on the identification information on the electric vehicle 300. While transmitting the request for identifying whether the electric vehicle 300 is currently charged to the external server 300, the electronic device 100 may request identification of whether the corresponding electric vehicle 300 is currently charged. The identification information on the electric vehicle 300 may be information received by the electronic device 100 from the user terminal 200 and may be information registered in advance in the electronic device 100. The external sever 500 may determine, through the communication with the charging device 400, whether the electric vehicle 300 which corresponds to the identification information on the electric vehicle 300 is currently charged.

In operation S550, the external server 500 may transmit the charging information on the electric vehicle 300 to the electronic device 100. The external server 500 may transmit the charging information on the electric vehicle from the time point at which the charging of the electric vehicle begins to the predetermined time point to the electronic device 100.

In operation S560, the electronic device 100 may transmit the charging information on the electric vehicle 300 to the user terminal 200. The electronic device 100 may provide the diagnostic information on the battery of the electric vehicle 300 which is acquired based on the charging information on the electric vehicle 300 to the user terminal 200.

The present specification and drawings have been described with respect to the example embodiments of the present disclosure. Although specific terms are used, it is only used in a general sense to easily explain the technical content of the present disclosure and to help the understanding of the invention, and is not intended to limit the scope of the specification. It will be apparent to those skilled in the art that other modifications based on the technical spirit of the present disclosure may be implemented in addition to the embodiments disclosed herein.

The present example embodiments may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include the meaning of a series of routines of software in association with a processor.

The above-described embodiments are merely examples and other embodiments may be implemented within the scope of the following claims.

## Claims

1. An electronic device comprising:
a communication interface communicatively connected to a user terminal and an external server;
a memory; and
a processor,
wherein the processor is configured to:
receive information on a communication connection status of an electric vehicle from the user terminal;
identify, based on the information on the communication connection status, whether communication between the user terminal and the electric vehicle is connected;
transmit, when identifying that communication connection between the user terminal and the electric vehicle is terminated, a request for identifying whether the electric vehicle is currently charged through the external server;
receive charging information on the electric vehicle from the external server when a response indicating that the electrical vehicle is currently charged is received from the external server; and
provide the charging information on the electric vehicle to the user terminal.

2. The electronic device of claim 1, wherein the processor is configured to identify whether the electric vehicle is currently charged through the external server based on identification information on the electric vehicle.

3. The electronic device of claim 1, wherein the charging information on the electric vehicle is acquired based on power line communication between battery management systems included in the electric vehicle and a charging device configured to charge the electric vehicle.

4. The electronic device of claim 1, wherein the processor is configured to provide battery information on the electric vehicle, which is acquired based on the charging information on the electric vehicle, and diagnostic information on a battery of the electric vehicle to the user terminal.

5. The electronic device of claim 1, wherein the processor is configured to update diagnostic information on a battery of the electric vehicle based on the charging information on the electric vehicle identified by the external server according to a predetermined period.

6. The electronic device of claim 1, wherein the processor is configured to transmit, to the user terminal, a request for first battery information on the electric vehicle from termination of the communication connection with the electric vehicle to resumption of the communication connection when a response indicating that the electric vehicle is not currently charged is received from the external server.

7. The electronic device of claim 6, wherein the processor is configured to provide, to the user terminal, diagnostic information on a battery of the electric vehicle acquired based on the first battery information after the first battery information is received from the user terminal.

8. The electronic device of claim 1, wherein when the communication between the user terminal and the electric vehicle is identified as being connected, the processor is configured to:
receive battery information on the electric vehicle, which is acquired from a self-diagnosis device of the electric vehicle, from the user terminal; and
transmit diagnostic information on a battery of the electric vehicle, which is based on the battery information on the electric vehicle, to the user terminal.

9. The electronic device of claim 1, wherein the communication connection between the user terminal and the electric vehicle is performed based on at least one communication scheme of Bluetooth communication and Wi-Fi communication.

10. A method of providing diagnostic information on a battery of an electric vehicle, the method performed by an electronic device and comprising:
receiving information on a communication connection status of an electric vehicle from the user terminal;
identifying, based on the information on the communication connection status, whether communication between the user terminal and the electric vehicle is connected;
transmitting, when identifying that communication connection between the user terminal and the electric vehicle is terminated, a request for identifying whether the electric vehicle is currently charged through an external server;
receiving charging information on the electric vehicle from the external server when a response indicating that the electrical vehicle is currently charged is received from the external server; and
providing the charging information on the electric vehicle to the user terminal.

11. A diagnostic information provision system comprising:
a user terminal configured to transmit information on communication connection status of an electric vehicle to an electronic device; and
an electronic device configured to identify, based on the information on the communication connection status, whether communication between the user terminal and the electric vehicle is connected, transmit, when identifying that communication connection between the user terminal and the electric vehicle is terminated, a request for identifying whether the electric vehicle is currently charged through an external server, receive charging information on the electric vehicle from the external server when a response indicating that the electrical vehicle is currently charged is received from the external server, and provide the charging information on the electric vehicle to the user terminal.
